# EUROPEAN PATENT APPLICATION

(11) **EP 2 145 759 A1**
(43) Date of publication of application: **20.01.2010**
(21) Application number: 08405179.6
(22) Date of filing: 15.07.2008
(51) Int. Cl.: B32B 15/08, B32B 27/36, B65D 65/40, B65D 1/28

(54) **Laminate and container made of the laminate by deep-drawing**

(71) Applicant: Alcan Technology & Management Ltd., 8212 Neuhausen am Rheinfall (CH)
(72) Inventor: Geerts, Ronald Franciscus Richard, 3813 AB Amersfoort (NL); Verbeek, Dirk Cornells, 7325 PC Apeldoorn (NL); Engelhart, Hendrik, 7205 EB Zutphen (NL); Hutter, Leo, 9444 Dlepoldsau (CH)

(57) **Abstract**

A laminate (30) for the production of a container (10) by deep-drawing consisting of an aluminium foil (32) having a thickness of 60 to 250 µm and a biaxially oriented polyester film (36) having a thickness of 10 to 75 µm, connected to the aluminium foil (32) by means of a laminate adhesive (34). The laminate is suitable for the production of containers for packaging ready meals which are sterilized in the closed container and can be reheated both in a microwave and in a conventional oven heated to a temperature of up to 220°C.

## Description

The invention relates to a laminate for the production of a container by deep-drawing, a method of producing a container and a container having a bottom, a sidewall extending from the bottom, a ring-shaped sealing area and a lid sealed onto the sealing area.

From EP 0 140 282 A2, a method for producing a container is known in which a metal foil of a thickness of not more than 40 µm and covered on one or both sides with hotmelt is produced by shaping from the flat foil, with fold-forming in the sidewall. The fold-forming is effected by a corresponding grooving of the forming tool. The folds are intended to avoid the forming of cracks or bores even in the case of use of thin metal foils of less than 40 µm and thus ensure the desired tightness requirements for long-term preserving. However, precisely at the folding point, the forming of pores or cracks cannot be ruled out with certainty. Apart from this, the appearance of a container provided with folds in the sidewall is unsatisfactory. Finally, a high material expenditure is required for forming the folds.

For packaging ready meals prepared to be reheated later in the microwave or in the oven, sterilized containers made of semi-rigid material are known. The containers often consist of a e.g. golden lacquered aluminium foil, formed by deep-drawing. The lid sealed rigidly or peelably onto the container rim is usually made of the same material as the container.

From EP 1 762 503 A1 a sterilizable semi-rigid container is known, having a container wall extending from the bottom, a ring-shaped sealing area confining a container opening and a lid peelably sealed onto the sealing area. Container and lid consist of an aluminium foil having a lacquer layer on one of the surfaces providing the exterior of the container and a sealing layer on the other surface providing the interior of the container. The container is shaped from the flat foil by deep-drawing.

From EP 1 787 799 A1, a deep-drawable composite containing an aluminium foil is known as a suitable composite material for producing deep-drawn containers and lid foil for sealing onto the containers. To increase the buckling resistance and decrease the thermal conductivity, the aluminium foil is on one side coated with a closed-cell plastic foam. The foam layers extruded from polyethylene terephthalate as C-PET or A-PET exhibit excellent thermoforming properties and offer a high temperature resistance and a high mechanical resistance. The plastic foam layer is forming the exterior of the container and the exterior of a lid sealed onto the container. On the other side forming the interior of the container and the interior of a lid sealed onto the container, the aluminium foil is coated with a hot sealing layer of e.g. polyethylene (PE) or polypropylene (PP) or a hot sealing lacquer. The containers having a peelably sealed lid are suitable as one or multiple serving packs for packaging of fill goods intended to be reheated in a microwave.

It is the object of the invention to provide a deep-drawable laminate containing a metal foil for the production of a container. The container shall be suitable for the use both in a microwave and in an oven heated to a temperature of up to 220°C. After filling the container and sealing a preferably transparent lid onto the container, the container shall be able to be pasteurized or sterilized. In addition, the offered solution shall be free of PVC (polyvinylchloride) containing materials.

The foregoing object is achieved according to the invention by a laminate of an aluminium foil having a thickness of 60 to 250 µm and a biaxially oriented polyester film having a thickness of 10 to 75 µm connected to the aluminium foil by using a laminate adhesive.

The core of the invention lies in the combination of the polyester film that is heat-resistant when heated in a microwave and in a conventional oven to a temperature of up to 220°C, and the deep-drawable aluminium foil.

The laminate is formed into the container by deep-drawing, the aluminium foil representing the exterior and the polyester film the interior of the container.

The aluminium foil has a preferable thickness of 90 to 160 µm, particularly 100 to 130 µm.

The polyester film has a preferable thickness of 20 to 35 µm, particularly 20 to 25 µm. A preferred polyester film is a film of polyethylene terephthalate (PET).

A preferred laminate adhesive is an adhesive which is resistant to a temperature of up to 220°C, e.g. an adhesive on a polyurethane (PU) or epoxide base.

The container produced of the laminate according to the invention by deep-drawing comprises a bottom, a sidewall extending from the bottom, a ring-shaped sealing area as a container rim and a lid sealed onto the sealing area.

The present invention comprises all shapes of containers that can be produced with the usual deep-drawing methods. Possible shapes are e.g. round, square, triangular, rectangular, pentagonal, hexagonal and octagonal.

The main application of the container produced from the laminate according to the present invention by deep-drawing lies in the packaging of ready meals that are sterilized in the closed container and can be reheated both in a microwave or in a conventional oven to a temperature of up to 220°C.

Further advantages, features and details of the invention are revealed in the following description of preferred exemplified embodiments and with the aid of the drawing which shows schematically in
- Fig. 1: a perspective view of a container with partly open lid;
- Fig. 2: a view from above on the container shown in fig. 1;
- Fig. 3: a cross-section of the container shown in fig. 1 along line I-I of fig. 2;
- Fig. 4: a cross-section of the laminate used in the production of the container shown in fig. 1 along line II-II of fig. 3.

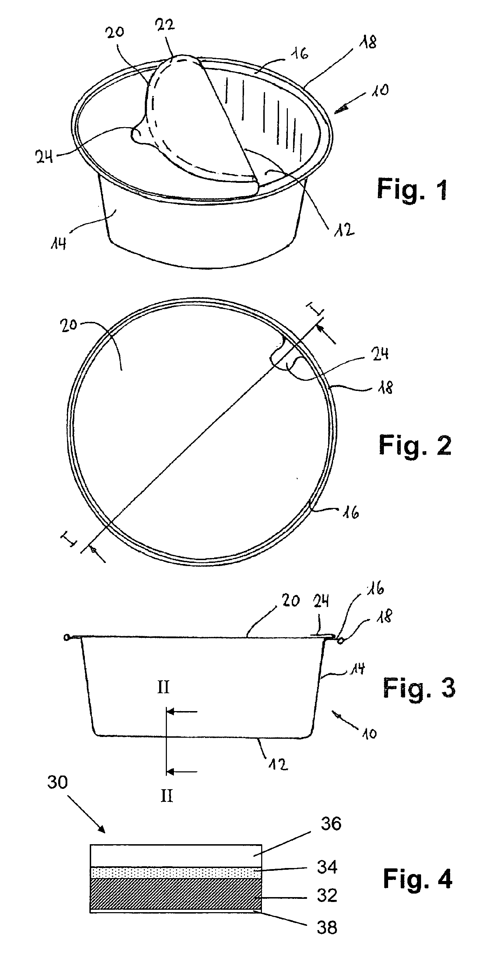

A container 10 shown in figs. 1 to 3 for receiving e.g. ready meals has a bottom 12 and a sidewall 14 extending from the bottom 12 and defining a filling volume. From bottom 12 the sidewall 14 extends upwards with an outwardly inclined angle of e.g. 1 to 12° and goes at its bottom far end into a ring-shaped sealing area 16 horizontally extending outwardly and having a width of e.g. 2,0 to 5,0 mm. The part of the sidewall 14 residing after the sealing area 16 is curled outwardly or inwardly as a container rim so that the upper edge of the curled rim 18, having a diameter of e.g. 1,0 to 4 mm, particularly 1,5 to 2,5 mm, lies above the plane defined by the sealing area 16.

The outer diameter of the container 10 amounts to e.g. 60 to 150 mm, the height 27,5 to 72,5 mm.

A lid 20 closing the container 10 is sealed via an outer sealing rim 22 onto the sealing area 16 of the container 10.

In the example shown in figs. 1 to 3 the lid 20 is peelable and can be torn off from the sealing area 16 of the container 10 by means of a tear tab 24 arranged outside of the sealing rim 22. The container is made from the laminate by deep-drawing.

A composition of a laminate 30 as shown in fig. 4 for the production of containers 10 consists of a e.g. 100 µm thick aluminium foil 32 connected to a e.g. 23 µm thick biaxially oriented PET film by means of a laminate adhesive 34 on the basis of e.g. polyurethane or epoxide.

The lid 20 is e.g. a multilayer transparent film having a sealable layer of a hot sealing lacquer or a sealable plastic layer pointing to the container 10 and sealable to the PET film 36 of the container laminate and a plastic film of e.g. oriented polyamide (oPA) representing the exterior.

The aluminium foil 32 of the laminate 30 and the container 10 produced by deep-drawing, respectively, may be provided with a lacquer layer 38 on the outside. The lacquer layer 38 of the container material is usually colored. Preferred colors are gold, silver, white, blue, green, crimson, red and black. The aluminium foil and /or the lacquer layer can also be printed. The printing can be applied partial or on the whole area. The printing can include any design. The gravure or UV/flexo color systems used comply in their properties to the requirements made on the deep-drawing and the sterilization process.

In connection with the present invention, pasteurizability and sterilizability means a treatment under usual pasteurizing or sterilizing conditions, i.e. 30 - 90 minutes at a temperature of 65 - 130°C at a pressure of 0 - 2,6 bar and a counter-pressure of 0 - 2,8 bar.

## Claims

1. Laminate for the production of a container (10) by deep-drawing,
**characterized in that**
the laminate (30) consists of an aluminium foil (32) having a thickness of 60 to 250 µm and a biaxially oriented polyester film (36) having a thickness of 10 to 75 µm, connected to the aluminium foil (32) by means of a laminate adhesive (34).

2. Laminate according to claim 1, **characterized in that** the aluminium foil (32) has a thickness of 90 to 160 µm, particularly 100 to 130 µm.

3. Laminate according to claim 1, **characterized in that** the biaxially oriented polyester film (36) has a thickness of 20 to 25 µm, particularly 20 to 25 µm.

4. Laminate according to one of claims 1 to 3, **characterized in that** the polyester film (36) is a film of polyethylene terephthalate (PET).

5. Laminate according to one of claims 1 to 4, **characterized in that** the laminate adhesive (34) is an adhesive on a polyurethane or epoxide base.

6. Method of producing a container (10), **characterized in that** a laminate (30) according to one of the preceding claims is formed to the container (10) by deep-drawing, the aluminium foil (32) representing the exterior and the polyester film (36) representing the interior of the container (10).

7. Container (10), having a bottom (12), a sidewall (14) extending from the bottom (12), a ring-shaped sealing area (16) and a lid (20) sealed onto the sealing area (16),
**characterized in that**
the container (10) is made of a laminate (30) consisting of an aluminium foil (32) having a thickness of 60 to 250 µm and a biaxially oriented polyester film (36) made by deep-drawing having a thickness of 10 to 75 µm representing the interior of the container (10), and being connected to the aluminium foil (32) by means of a laminate adhesive (34).

8. Container according to claim 7, **characterized in that** the aluminium foil (32) has a thickness of 90 to 160 µm, particularly 100 to 130 µm.

9. Container according to claim 7, **characterized in that** the biaxially oriented polyester film (36) has a thickness of 20 to 35 µm, particularly 20 to 25 µm.

10. Container according to one of the claims 7 to 9, **characterized in that** the polyester film (36) is a film of polyethylene terephthalate (PET).

11. Container according to one of the claims 7 to 10, **characterized in that** the laminate adhesive (34) is an adhesive on a polyurethane or epoxide base.
